# EUROPEAN PATENT APPLICATION

(11) **EP 2 910 121 A1**
(43) Date of publication of application: **26.08.2015**
(21) Application number: 13836698.4
(22) Date of filing: 04.09.2013
(51) Int. Cl.: A01N 25/02, A01N 53/06, A01P 7/04

(54) **LIQUID INSECTICIDAL COMPOSITION**

(30) Priority: 13.09.2012 JP 2012201286
(71) Applicant: Sumitomo Chemical Company, Limited, Tokyo 104-8260 (JP)
(72) Inventor: YAMADA, Masahiro, Takarazuka-shi Hyogo 665-8555 (JP)
(74) Representative: Vossius & Partner Patentanwälte Rechtsanwälte mbB
(86) International application number: PCT/JP2013/074450
(87) International publication number: WO 2014/042166

(57) **Abstract**

The present invention relates to a liquid insecticidal composition consisiting of one or more pyrethroid compounds (for example, compounds represented by the following formula (I)
(4-methoxymethyl-2,3,5,6-tetrafluorobenzyl=2,2-dimethyl-3-( 1-propenyl)cyclopropanecarboxylate,
4-methyl-2,3,5,6-tetrafluorobenzyl=2,2-dimethyl-3-(1-propen yl)cyclopropanecarboxylate,
4-methoxymethyl-2,3,5,6-tetrafluorobenzyl=2,2-dimethyl-3-(2 -cyano-1-propenyl)cyclopropanecarboxylate, and the like)) and two or more organic solvents, wherein the liquid insecticidal composition has a density of 0.80 g/cm³ or more and a kinematic viscosity coefficient of 2.0 cSt or more and 6.0 cSt or less, 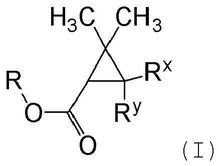 wherein R^{x} R^{y} and R represent the same meaning as defined in the specification.

The liquid insecticidal composition of the present invention is a liquid insecticidal composition for spraying exhibiting an excellent controlling effect on insect pests.

## Description

### TECHNICAL FIELD

The present invention relates to a liquid insecticidal composition for spraying containing a pyrethroid compound and exhibiting an excellent controlling effect on insect pests even with a small injection amount.

### BACKGROUND ART

A liquid formulation containing a pyrethroid compound as an active ingredient is conventionally known, and for example, Patent Document 1 describes a liquid formulation for spraying of a certain pyrethroid compound.

### PRIOR ART DOCUMENT

### PATENT DOCUMENT

Patent Document 1: JP-A-2011-126875

### SUMMARY OF THE INVENTION

### PROBLEMS TO BE SOLVED BY THE INVENTION

An object of the present invention is to provide a liquid insecticidal composition containing a pyrethroid compound exhibiting an excellent controlling effect on insect pests even with a small injection amount.

### MEANS FOR SOLVING THE PROBLEMS

As a result of an intensive study to find a liquid formulation for spraying containing a pyrethroid compound and exhibiting an excellent controlling effect on insect pests, the present inventors have found that, in a liquid composition consisiting of a pyrethroid compound and two or more organic solvents, when the liquid composition has a density and a kinematic viscosity in specific ranges, the liquid composition has an excellent controlling effect on insect pests even with a small application amount.

The present invention is as described below.
[1] A liquid insecticidal composition consisiting of one or more pyrethroid compounds and two or more organic solvents, wherein the liquid insecticidal composition has a density of 0.80 g/cm³ or more and a kinematic viscosity coefficient of 2.0 cSt or more and 6.0 cSt or less.
[2] The liquid insecticidal composition according to [1], wherein the one or more pyrethroid compounds are one or more pyrethroid compounds represented by formula (I), 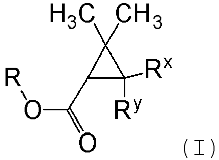 wherein R^{x} and R^{y} both represent a methyl group, or R^{x} is a hydrogen atom and R^{y} represents the following group, 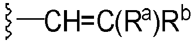 wherein R^{a} represents a hydrogen atom, a halogen atom or a methyl group, and R^{b} represents a halogen atom, a methyl group, a trifluoromethyl group or a cyano group, and R represents any one of the following groups, 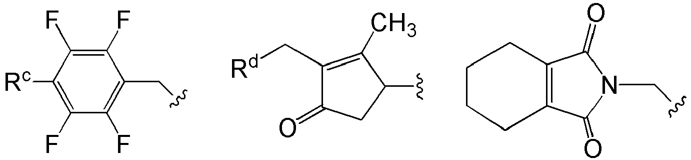 wherein R^{c} represents a hydrogen atom, a methyl group, a propargyl group or a methoxymethyl group, and R^{d} represents a vinyl group or an ethynyl group.
[3] The liquid insecticidal composition according to [1], wherein the one or more pyrethroid compounds are one or more pyrethroid compounds represented by formula (II), 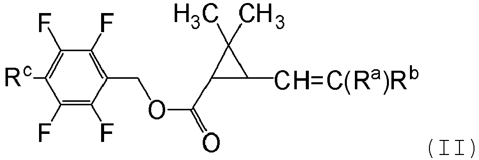 wherein R^{a} represents a hydrogen atom, a halogen atom or a methyl group, R^{b} represents a halogen atom, a methyl group, a trifluoromethyl group or a cyano group, and R^{c} represents a hydrogen atom, a methyl group, a propargyl group or a methoxymethyl group.
[4] The liquid insecticidal composition according to [1], wherein the one or more pyrethroid compounds are any one selected from the group consisting of
   4-methoxymethyl-2,3,5,6-tetrafluorobenzyl=2,2-dimethyl-3-(1 -propenyl)cyclopropanecarboxylate,
   4-methyl-2,3,5,6-tetrafluorobenzyl=2,2-dimethyl-3-(1-propen yl)cyclopropanecarboxylate,
   4-methoxymethyl-2,3,5,6-tetrafluorobenzyl=2,2-dimethyl-3-(2 -methyl-1-propenyl)cyclopropanecarboxylate,
   4-methoxymethyl-2,3,5,6-tetrafluorobenzyl=2,2-dimethyl-3-(2 -cyano-1-propenyl)cyclopropanecarboxylate,
   4-methoxymethyl-2,3,5,6-tetrafluorobenzyl=2,2-dimethyl-3-(2 ,2-dichlorovinyl)cyclopropanecarboxylate,
   4-methoxymethyl-2,3,5,6-tetrafluorobenzyl=2,2-dimethyl-3-(3 ,3,3-trifluoro-1-propenyl)cyclopropanecarboxylate,
   2,3,5,6-tetrafluorobenzyl=2,2-dimethyl-3-(2,2-dichlorovinyl )cyclopropanecarboxylate,
   4-methoxymethyl-2,3,5,6-tetrafluorobenzyl=2,2,3,3-tetrameth ylcyclopropanecarboxylate,
   4-propargyl-2,3,5,6-tetrafluorobenzyl=2,2,3,3-tetramethylcy clopropanecarboxylate,
   3-allyl-2-methyl-4-oxocyclopent-2-enyl=2,2-dimethyl-3-(2-me thyl-1-propenyl)cyclopropanecarboxylate,
   3-propargyl-2-methyl-4-oxocyclopent-2-enyl=2,2-dimethyl-3-( 2-methyl-1-propenyl)cyclopropanecarboxylate, and
   cyclohex-1-ene-1,2-dicarboxyimidemethyl=2,2-dimethyl-3-(2-m ethyl-1-propenyl)cyclopropanecarboxylate.
[5] The liquid insecticidal composition according to [1], wherein the total content of the one or more pyrethroid compounds is 0.5 to 5 parts by weight.
[6] The liquid insecticidal composition according to [5], wherein the one or more pyrethroid compounds are one or more pyrethroid compounds selected from the group consisting of
   4-methoxymethyl-2,3,5,6-tetrafluorobenzyl=2,2-dimethyl-3-(2 -cyano-1-propenyl)cyclopropanecarboxylate,
   2,3,5,6-tetrafluorobenzyl=2,2-dimethyl-3-(2,2-dichlorovinyl )cyclopropanecarboxylate and
   3-propargyl-2-methyl-4-oxocyclopent-2-enyl=2,2-dimethyl-3-( 2-methyl-1-propenyl)cyclopropanecarboxylate.
[7] A liquid insecticidal composition consisiting of one or more pyrethroid compounds, two or more organic solvents and one or more formulation additives, wherein the liquid insecticidal composition has a density of 0.80 g/cm³ or more and a kinematic viscosity coefficient of 2.0 cSt or more and 6.0 cSt or less.

### EFFECT OF THE INVENTION

The liquid insecticidal composition of the present invention has an excellent controlling effect on insect pests even with a small application amount and small spray amount.

### MODE FOR CARRYING OUT THE INVENTION

The liquid insecticidal composition of the present invention can be used using various spray devices such as a spray gun, a sprayer, a hand spray and an aerosol container, and is preferably used using a spray device provided with a two fluid nozzle that mixes the liquid insecticidal composition of the present invention and a gas (air and vaporized propellant) to spray fine mist. The liquid insecticidal composition of the present invention is used by spraying on an insect pest or a habitat or flying path of an insect pest.

The pyrethroid compound in the present invention means natural or synthetic pyrethroid compound. The structural feature of the pyrethroid compound is to have a cyclopropanecarboxylic acid skeleton, and examples thereof include compounds represented by formula (I), 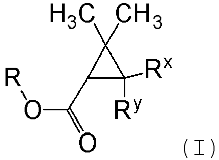 wherein R^{x} and R^{y} both represent a methyl group, or R^{x} represents a hydrogen atom, and R^{y} represents the following group, 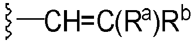 wherein R^{a} represents a hydrogen atom, a halogen atom or a methyl group, and R^{b} represents a halogen atom, a methyl group, a trifluoromethyl group or a cyano group, and R represents any one of the following groups, 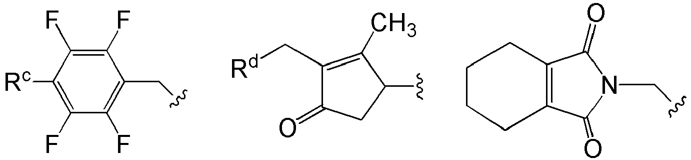 wherein R^{c} represents a hydrogen atom, a methyl group, a propargyl group or a methoxymethyl group, and R^{d} represents a vinyl group or an ethynyl group, compounds represented by the formula, 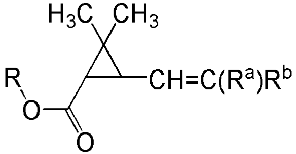 wherein R^{a}, R^{b} and R represent the same meaning as described above, and compounds represented by formula (II), 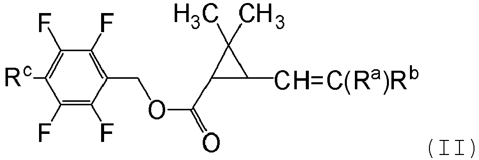 wherein R^{a}, R^{b} and R^{c} represent the same as described above. Specific examples of pyrethroid compounds include
4-methoxymethyl-2,3,5,6-tetrafluorobenzyl=2,2-dimethyl-3-(1 -propenyl)cyclopropanecarboxylate,
4-methyl-2,3,5,6-tetrafluorobenzyl=2,2-dimethyl-3-(1-propen yl)cyclopropanecarboxylate,
4-methoxymethyl-2,3,5,6-tetrafluorobenzyl=2,2-dimethyl-3-(2 -methyl-1-propenyl)cyclopropanecarboxylate,
4-methoxymethyl-2,3,5,6-tetrafluorobenzyl=2,2-dimethyl-3-(2 -cyano-1-propenyl)cyclopropanecarboxylate,
4-methoxymethyl-2,3,5,6-tetrafluorobenzyl=2,2-dimethyl-3-(2 ,2-dichlorovinyl)cyclopropanecarboxylate,
4-methoxymethyl-2,3,5,6-tetrafluorobenzyl=2,2-dimethyl-3-(3 ,3,3-trifluoro-1-propenyl)cyclopropanecarboxylate,
2,3,5,6-tetrafluorobenzyl=2,2-dimethyl-3-(2,2-dichlorovinyl )cyclopropanecarboxylate,
4-methoxymethyl-2,3,5,6-tetrafluorobenzyl=2,2,3,3-tetrameth ylcyclopropanecarboxylate,
4-propargyl-2,3,5,6-tetrafluorobenzyl=2,2,3,3-tetramethylcy clopropanecarboxylate,
3-allyl-2-methyl-4-oxocyclopent-2-enyl=2,2-dimethyl-3-(2-me thyl-1-propenyl)cyclopropanecarboxylate,
3-propargyl-2-methyl-4-oxocyclopent-2-enyl=2,2-dimethyl-3-( 2-methyl-1-propenyl)cyclopropanecarboxylate, and
cyclohex-1-ene-1,2-dicarboxyimidemethyl=2,2-dimethyl-3-(2-m ethyl-1-propenyl)cyclopropanecarboxylate.

The total content of the pyrethroid compound is usually 0.3 to 10% by weight and preferably 0.5 to 5% by weight, based on the whole amount of the liquid insecticidal composition of the present invention.

The liquid insecticidal composition of the present invention comprises one or more pyrethroid compounds and two or more organic solvent, and may contain a formulation additive in an amount of 5% by weight or less of the whole amount of the liquid insecticidal composition of the present invention, as necessary.

The formulation additive that may be contained in the liquid insecticidal composition of the present invention includes synergists, viscosity modifiers, stabilizers, and flavors.

Two or more organic solvents used in the liquid insecticidal composition of the present invention are two or more organic solvents selected from the following group (a) to group (d) and preferably two or more organic solvents selected from different groups of the following group (a) to group (d).
Group (a): hydrocarbon solvents
   Normal paraffin solvents such as Neo-chiozol (manufactured by Chuo Kasei Co., Ltd.), Norpar 13 (manufactured by ExxonMobil Yugen Kaisha), and Norpar 15 (manufactured by ExxonMobil Yugen Kaisha); isoparaffin solvents such as Isopar G (manufactured by ExxonMobil Yugen Kaisha), Isopar L (manufactured by ExxonMobil Yugen Kaisha), Isopar H (manufactured by ExxonMobil Yugen Kaisha), and Isopar M (manufactured by ExxonMobil Yugen Kaisha); saturated hydrocarbon solvents such as Exxsol D40 (manufactured by ExxonMobil Yugen Kaisha), Exxsol D60 (manufactured by ExxonMobil Yugen Kaisha), Exxsol D80 (manufactured by ExxonMobil Yugen Kaisha), Exxsol D130 (manufactured by ExxonMobil Yugen Kaisha), CACTUS normal paraffin N-12 (manufactured by Japan Energy Corporation), CACTUS normal paraffin N-13 (manufactured by Japan Energy Corporation), CACTUS normal paraffin N-14 (manufactured by Japan Energy Corporation), CACTUS normal paraffin N-15H (manufactured by Japan Energy Corporation), and CACTUS normal paraffin YHNP (manufactured by Japan Energy Corporation); and aromatic hydrocarbon solvents such as Alkene L (aromatic hydrocarbon, manufactured by Nippon Oil Corporation, boiling point: 285 to 309°C) and Alkene 200P (aromatic hydrocarbon, manufactured by Nippon Oil Corporation, boiling point: 321 to 390°C)
Group (b): ester solvents
   Alkyl alkylcarboxylates having 12 to 30 carbon atoms such as isopropyl myristate, hexyl laurate, and isopropyl palmitate; dialkyl dicarboxylates having 12 to 30 carbon atoms such as diisopropyl adipate, dioctyl adipate, diisononyl adipate, and diisodecyl adipate; trialkyl acetylcitrates having 12 to 30 carbon atoms such as triethyl acetylcitrate and tributyl acetylcitrate; trialkyl citrates having 12 to 30 carbon atoms such as triethyl citrate; and dialkyl phthalates having 12 to 30 carbon atoms such as dibutyl phthalate and diisononyl phthalate
Group (c): alcohol solvents
   Monoalcohol solvents such as ethanol, propanol, 2-propanol, and butanol; and glycol ether alcohol solvents such as ethylene glycol monomethyl ether, ethylene glycol monoethyl ether, ethylene glycol monopropyl ether, propylene glycol monomethyl ether, propylene glycol monoethyl ether, and propylene glycol monopropyl ether
Group (d): heterocyclic solvents
   Propylene carbonate, ethylene carbonate, sulfolane, γ-butyrolactone, N-methyl-2-pyrrolidone, N-ethyl-2-pyrrolidone, N-octyl-2-pyrrolidone, and 1,3-dimethyl-2-imidazolidinone

The liquid insecticidal composition of the present invention has a density of 0.80 g/cm³ or more and a kinematic viscosity coefficient of 2.0 cSt (centistokes) or more and 6.0 cSt or less.

The liquid insecticidal composition of the present invention preferably has a density of 0.80 g/cm³ or more and 0.90 g/cm³ or less, and further preferably 0.80 g/cm³ or more and 0.88 g/cm³ or less.

When the liquid composition has a kinematic viscosity coefficient of less than 2.0 cSt or more than 6.0 cSt, mist with a fine particle size may not be generated, thus an excellent effect on insect pests cannot be stably obtained.

Also, when the liquid composition has a density of less than 0.80 g/cm³, it may be difficult to make the liquid composition sufficiently rapidly reach to an insect pest or the pass thereof in which the generated fine mist is sprayed, thus an excellent effect on an insect pest cannot be stably obtained either.

The liquid insecticidal composition of the present invention is sufficiently uniform, thus the density and the kinematic viscosity coefficient can be easily measured using a commercially available measuring device.

Here, the density and the viscosity in the present invention mean a value of a liquid insecticidal composition at 25°C.

The density of the liquid insecticidal composition can be obtained by accurately measuring the volume of the liquid insecticidal composition at a liquid temperature of 25°C, and the mass of the liquid insecticidal composition is measured at 25°C.

The viscosity of the liquid insecticidal composition can be obtained by a single cylindrical rotational viscometer.

The kinematic viscosity coefficient of the liquid insecticidal composition can be obtained by dividing the viscosity by the density.

When the liquid insecticidal composition of the present invention is sprayed in a mist form with a spray device, the liquid insecticidal composition may be sprayed using compressed air or a propellant to be vaporized under an ordinary temperature and pressure.

For example, in the case of using the liquid insecticidal composition of the present invention with an aerosol, the liquid insecticidal composition is charged to a pressure-resistant container equipped with an injection device, and a propellant is charged via a stem to prepare an aerosol.

The effective amount of the liquid insecticidal composition of the present invention is sprayed on an insect pest, a path of an insect pest and/or a habitat of an insect pest, whereby the insect pest can be controlled. Practically, it is desirable to spray the effective amount of the liquid insecticidal composition of the present invention to a space of a place to be controlled. The spray amount at that time is usually 0.001 to 1000 mg/m³, preferably 0.001 to 100 mg/m³, and more preferably 0.01 to 10 mg/m³, in terms of the contained pyrethroid compound. Also, when the liquid insecticidal composition of the present invention is sprayed on a plane, the spray amount is usually 0.0001 to 1000 mg/m², in terms of the contained pyrethroid compound. Examples of the spaces to which the liquid insecticidal composition of the present invention is sprayed include room interiors, living rooms, dining rooms, closets, wardrobes, chests such as Japanese chests, cupboards, toilets, bathrooms, storerooms, warehouses, car interiors, and the like, and the liquid insecticidal composition can also be sprayed to outdoor open space.

Examples of the insect pest that can be controlled by the liquid insecticidal composition of the present invention include the following arthropods such as insects and mites.

Lepidoptera insect pests: Pyralidae such as Chilo suppressalis, Cnaphalocrocis medinalis and Plodia interpunctella; Hadeninae such as Spodoptera litura, Pseudaletia separata, and Mamestra brassicae; Pieridae such as Pieris rapae; Tortricidae such as Adoxophyes orana; Carposinidae; Lyonetiidae; Lymantriidae; Antographa; Agrotis spp. insect pests such as Agrotis segetum and Agrotis ipsilon; Helicoverpa spp. insect pests; Heliothis spp. insect pests; Plutella xylostella; Parnara guttata; Tinea translucens; Tineola bisselliella; etc.

Diptera insect pests: Culex such as Culex pipiens pallens, Culex tritaeniorhynchus, and Culex quinquefasciatus; Aedes such as Aedes aegypti and Aedes albopictus; Anopheles such as Anopheles sinensis and Anopheles gambiae; Chironomidae; Muscidae such as Musca domestica, Muscina stabulans, and Fannia canicularis; Calliphoridae; Sarcophagidae; Anthomyiidae such as Delia platura and Delia antiqua; Tephritidae; Drosophilidae; Psychodidae; Phoridae; Tabanidae; Simuliidae; Stomoxys; Ceratopogonidae; etc.

Blattodea insect pests: Blattella germanica, Periplaneta fuliginosa, Periplaneta americana, Periplaneta australasiae, Periplaneta brunnea, Blatta orientalis, etc.

Hymenoptera insect pests: Formicidae, Apocrita (Polistinae such as Polistes chinensis antennalis, Polistes riparius, Polistes jadwigae jadwigae, Polistes rothneyi, Polistes nipponensis, Polistes snelleni, and Polistes japonicus; Vespidae such as Vespa mandarinia, Vespa simillima xanthoptera, Vespa analis, Vespa crabro, Vespa ducalis, Vespula flaviceps, Vespula shidai, and Dolichovespula media; Bethylidae; Xylocopa; Pompilidae; Sphecidae; Eumeninae; etc.)

Aphaniptera insect pests: Ctenocephalides canis, Ctenocephalides felis, Pulex irritans, etc.

Anoplura insect pests: Pediculus humanus, Pthirus pubis, Pediculus humanus capitis, Pediculus humanus corporis, etc.

Isoptera insect pests: Reticulitermes speratus, Coptotermes formosanus, etc.

Hemiptera insect pests: Delphacidae such as Laodelphax striatellus, Nilaparvata lugens, and Sogatella furcifera; Deltocephalidae such as Nephotettix cincticeps and Nephotettix virescens; Aphididae; Pentatomidae; Aleyrodidae ; Coccidae; Tingidae; Psyliidae; Cimicidae; etc.

Coleoptera insect pests: Attagenus japonicus; Anthrenus verbasci; Diabrotica such as Diabrotica virgifera virgifera and Diabrotica undecimpunctata howardi; Scarabaeidae such as Anomala cuprea and Anomala rufocuprea; Curculionidae such as Sitophilus zeamais, Lissorhoptrus oryzophilus, Anthonomus grandis, and Callosobruchuys chienensis; Tenebrionidae such as Tenebrio molitor and Tribolium castaneum; Chrysomelidae such as Oulema oryzae, Phyllotreta striolata, and Aulacophora femoralis; Anobiidae; Epilachna spp. such as Epilachna vigintioctopunctata; Lyctidae; Bostrychidae; Cerambycidae; Paederus fuscipes; etc.

Thysanoptera insect pests: Thrips palmi, Frankliniella occidentalis, Thrips hawaiiensis, etc.

Orthoptera insect pests: Gryllotalpidae, Acrididae, etc. Acarina: Pyroglyphidae such as Dermatophagoides farinae and Dermatophagoides ptrenyssnus; Acaridae such as Tyrophagus putrescentiae and Aleuroglyphus ovatus; Glycyphagidae such as Glycyphagus privatus, Glycyphagus domesticus, and Glycyphagus destructor; Cheyletidae such as Cheyletus malaccensis and Cheyletus fortis; Tarsonemidae; Chortoglyphidae; Haplochthoniidae; Tetranychidae such as Tetranychus urticae, Tetranychus kanzawai, Panonychus citri, and Panonychus ulmi; Metastigmata such as Haemaphysalis longicornis

In particular, the liquid insecticidal composition of the present invention is effective for controlling flying insect pests, for example, Culicidae and Brachycera classified into Diptera insect pests, Apocrita classified into Hymenoptera insect pests.

### EXAMPLES

Hereinbelow, the present invention will be further described in detail according to examples such as production examples, test examples, and the like. However, the present invention is not limited to these examples. Here, the "part" in the formulation examples represents part by weight.

### Formulation Example 1

4-Methoxymethyl-2,3,5,6-tetrafluorobenzyl=2,2-dimethy 1-3-[2-cyano-1-propenyl(E/Z=1/9)]cyclopropanecarboxylate (0.75 parts), propylene carbonate (4.02 parts) and isopropyl myristate (95.23 parts) were mixed and stirred at room temperature for 5 minutes to obtain a liquid composition of 100 parts. Physical properties of the liquid composition were measured, and it was found that the density was 0.864 g/cm³ and the kinematic viscosity coefficient was 5.5 cSt.

### Formulation Example 2

4-Methoxymethyl-2,3,5,6-tetrafluorobenzyl=2,2-dimethy 1-3-[2-cyano-1-propenyl(E/Z=1/9)]cyclopropanecarboxylate (0.75 parts), propylene carbonate (4.02 parts), 2-propanol (16.67 parts), isopropyl myristate (33.33 parts) and Neo-chiozol (45.23 parts) (normal paraffin hydrocarbon, manufactured by Chuo Kasei Co., Ltd.) were mixed and stirred at room temperature for 5 minutes to obtain a liquid composition of 100 parts. Physical properties of the liquid composition were measured, and it was found that the density was 0.801 g/cm³ and the kinematic viscosity coefficient was 2.5 cSt.

### Formulation Example 3

2,3,5,6-Tetrafluorobenzyl=2,2-dimethyl-3-(2,2-dichlor ovinyl)cyclopropanecarboxylate (3.75 parts), 2-propanol (16 parts), isopropyl myristate (32 parts) and Neo-chiozol (48.25 parts) (normal paraffin hydrocarbon, manufactured by Chuo Kasei Co., Ltd.) were mixed and stirred at room temperature for 5 minutes to obtain a liquid composition of 100 parts. Physical properties of the liquid composition were measured, and it was found that the density was 0.800 g/cm³ and the kinematic viscosity coefficient was 2.9 cSt.

### Comparative Example 1

4-Methoxymethyl-2,3,5,6-tetrafluorobenzyl=2,2-dimethy 1-3-[2-cyano-1-propenyl(E/Z=1/9)]cyclopropanecarboxylate (0.75 parts), propylene carbonate (4.02 parts), isopropyl myristate (16.67 parts) and Neo-chiozol (78.56 parts) (normal paraffin hydrocarbon, manufactured by Chuo Kasei Co., Ltd.) were mixed and stirred at room temperature for 5 minutes to obtain a liquid composition of 100 parts. Physical properties of the liquid composition were measured, and it was found that the density was 0.775 g/cm³ and the kinematic viscosity coefficient was 2.8 cSt.

### Comparative Example 2

2,3,5,6-Tetrafluorobenzyl=2,2-dimethyl-3-(2,2-dichlor ovinyl)cyclopropanecarboxylate (3.75 parts), isopropyl myristate (18.25 parts) and Neo-chiozol (78 parts) (normal paraffin hydrocarbon, manufactured by Chuo Kasei Co., Ltd.) were mixed and stirred at room temperature for 5 minutes to obtain a liquid composition of 100 parts. Physical properties of the liquid composition were measured, and it was found that the density was 0.785 g/cm³ and the kinematic viscosity coefficient was 2.9 cSt.

### Comparative Example 3

4-Methoxymethyl-2,3,5,6-tetrafluorobenzyl=2,2-dimethy 1-3-[2-cyano-1-propenyl(E/Z=1/9)]cyclopropanecarboxylate (0.75 parts), propylene carbonate (4.02 parts), dipropylene glycol dimethyl ether (70 parts) and Neo-chiozol (25.23 parts) (normal paraffin hydrocarbon, manufactured by Chuo Kasei Co., Ltd.) were mixed and stirred at room temperature for 5 minutes to obtain a liquid composition of 100 parts. Physical properties of the liquid composition were measured, and it was found that the density was 0.867 g/cm³ and the kinematic viscosity coefficient was 1.4 cSt.

### Test Example

Ten indivisuals of adult Musca domestica (five males and five females) were released in a polyethylene cup (bottom diameter: 10.6 cm, upper diameter: 12 cm, height: 7 cm), and the cup was covered with a 16-mesh nylon gauze. Separately, a similar cup in which no Musca domestica was released was also prepared. The cup containing Musca domestica was placed in the center on the bottom face of a 70-cm cubic chamber, and the cap in which no Musca domestica was released was placed on the rear side on the bottom face.

About 200 mg of each of the liquid compositions obtained in Formulation Examples 1, 2 and 3 and Comparative Examples 1, 2 and 3 was applied into a chamber through a small window formed in the center part of the front side wall of the chamber, using a spray gun. The knock down rate (KD rate) at 1 minute after application was obtained. The result is shown in the following table.

| | KD Rate (%) after 1 Minute |
|---|---|
| Formulation Example 1 | 100 |
| Formulation Example 2 | 60 |
| Formulation Example 3 | 100 |
| Comparative Example 1 | 20 |
| Comparative Example 2 | 30 |
| Comparative Example 3 | 10 |

### INDUSTRIAL APPLICABILITY

The liquid insecticidal composition of the present invention has an excellent controlling effect on insect pests.

## Claims

1. A liquid insecticidal composition consisiting of one or more pyrethroid compounds and two or more organic solvent, wherein the liquid insecticidal composition has a density of 0.80 g/cm³ or more and a kinematic viscosity coefficient of 2.0 cSt or more and 6.0 cSt or less.

2. The liquid insecticidal composition according to claim 1, wherein the one or more pyrethroid compounds are one or more pyrethroid compounds represented by formula (I), 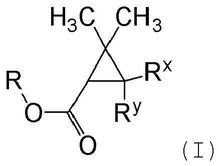 wherein R^{x} and R^{y} both represent a methyl group, or R^{x} represents a hydrogen atom and R^{y} represents the following group, 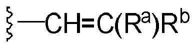 wherein R^{a} represents a hydrogen atom, a halogen atom or a methyl group, and R^{b} represents a halogen atom, a methyl group, a trifluoromethyl group or a cyano group, and R represents any one of the following groups, 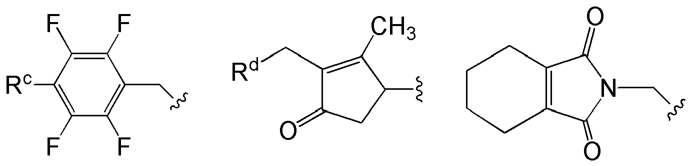 wherein R^{c} represents a hydrogen atom, a methyl group, a propargyl group or a methoxymethyl group, and R^{d} represents a vinyl group or an ethynyl group.

3. The liquid insecticidal composition according to claim 1, wherein the one or more pyrethroid compounds are one or more pyrethroid compounds represented by formula (II), 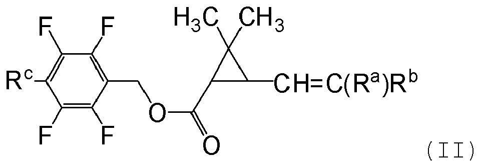 wherein R^{a} represents a hydrogen atom, a halogen atom or a methyl group, R^{b} represents a halogen atom, a methyl group, a trifluoromethyl group or a cyano group, and R^{c} represents a hydrogen atom, a methyl group, a propargyl group or a methoxymethyl group.

4. The liquid insecticidal composition according to claim 1, wherein the one or more pyrethroid compounds are any one selected from the group consisting of
4-methoxymethyl-2,3,5,6-tetrafluorobenzyl=2,2-dimethyl-3-(1 -propenyl)cyclopropanecarboxylate,
4-methyl-2,3,5,6-tetrafluorobenzyl=2,2-dimethyl-3-(1-propen yl)cyclopropanecarboxylate,
4-methoxymethyl-2,3,5,6-tetrafluorobenzyl=2,2-dimethyl-3-(2 -methyl-1-propenyl)cyclopropanecarboxylate,
4-methoxymethyl-2,3,5,6-tetrafluorobenzyl=2,2-dimethyl-3-(2 -cyano-1-propenyl)cyclopropanecarboxylate,
4-methoxymethyl-2,3,5,6-tetrafluorobenzyl=2,2-dimethyl-3-(2 ,2-dichlorovinyl)cyclopropanecarboxylate,
4-methoxymethyl-2,3,5,6-tetrafluorobenzyl=2,2-dimethyl-3-(3 ,3,3-trifluoro-1-propenyl)cyclopropanecarboxylate,
2,3,5,6-tetrafluorobenzyl=2,2-dimethyl-3-(2,2-dichlorovinyl )cyclopropanecarboxylate,
4-methoxymethyl-2,3,5,6-tetrafluorobenzyl=2,2,3,3-tetrameth ylcyclopropanecarboxylate,
4-propargyl-2,3,5,6-tetrafluorobenzyl=2,2,3,3-tetramethylcy clopropanecarboxylate,
3-allyl-2-methyl-4-oxocyclopent-2-enyl=2,2-dimethyl-3-(2-me thyl-1-propenyl)cyclopropanecarboxylate,
3-propargyl-2-methyl-4-oxocyclopent-2-enyl=2,2-dimethyl-3-( 2-methyl-1-propenyl)cyclopropanecarboxylate, and
cyclohex-1-ene-1,2-dicarboxyimidemethyl=2,2-dimethyl-3-(2-m ethyl-1-propenyl)cyclopropanecarboxylate.

5. The liquid insecticidal composition according to claim 1, wherein the total content of the one or more pyrethroid compounds is 0.5 to 5 parts by weight.

6. The liquid insecticidal composition according to claim 5, wherein the one or more pyrethroid compounds are one or more pyrethroid compounds selected from the group consisting of
4-methoxymethyl-2,3,5,6-tetrafluorobenzyl=2,2-dimethyl-3-(2 -cyano-1-propenyl)cyclopropanecarboxylate,
2,3,5,6-tetrafluorobenzyl=2,2-dimethyl-3-(2,2-dichlorovinyl )cyclopropanecarboxylate and
3-propargyl-2-methyl-4-oxocyclopent-2-enyl=2,2-dimethyl-3-( 2-methyl-1-propenyl)cyclopropanecarboxylate.

7. A liquid insecticidal composition consisiting of one or more pyrethroid compounds, two or more organic solvents and one or more formulation additives, wherein the liquid insecticidal composition has a density of 0.80 g/cm³ or more and a kinematic viscosity coefficient of 2.0 cSt or more and 6.0 cSt or less.
